# EUROPEAN PATENT APPLICATION

(11) **EP 1 955 627 A1**
(43) Date of publication of application: **13.08.2008**
(21) Application number: 06807930.0
(22) Date of filing: 24.08.2006
(51) Int. Cl.: A47J 37/10

(54) **LID FOR FRYING-PANS, CASSEROLES AND SIMILAR**

(30) Priority: 31.10.2005 ES 200502377 U
(71) Applicant: Vitrex, S.L., 50016 Zaragoza (ES)
(72) Inventor: CASAJUANA LINDHORST, Ivo, E-50016 Zaragoza (ES)
(74) Representative: Molina Garcia, Julia
(86) International application number: PCT/ES2006/000485
(87) International publication number: WO 2007/051875

(57) **Abstract**

The invention relates to a lid for frying-pans, saucepans and suchlike, which can be used to form a seal that can be opened on any of the aforementioned containers to which it is applied. The purpose of the invention is to provide a lid which, when appropriately coupled to the mouth of the container, can form a small outlet for steam, such as to prevent liquids from spilling due to excessive boiling and such that the interior of the container can be accessed with any suitable cooking utensil, such as a wooden spoon or similar, without the lid being removed. In addition, the lid provides protection against splashes and/or burns.

## Description

### OBJECT OF THE INVENTION

The present invention relates to a lid that has been specially designed to be used as an accessory for frying pans, saucepans and suchlike, making it possible to establish a practicable closure for any of the aforementioned containers to which it is applicable.

The object of the invention is to achieve a lid that, fitting suitably onto the mouth of the container, makes it possible to create a slight opening to let steam out, preventing liquids from boiling over, and which also makes it possible to access the inside of said container with any appropriate cooking utensil, e.g. a wooden spoon or suchlike, without the need to lift the lid, which acts as a means of protection against possible splashes and/or burns.

### BACKGROUND OF THE INVENTION

Cooking containers such as those mentioned above, i.e. frying pans, saucepans and suchlike, are usually assisted by lids that fit tightly onto their mouth, making it possible to cook food in a closed atmosphere, especially with a view to avoiding an excessive loss of water of steams. These lids are sometimes opaque ads sometimes transparent, made from tempered glass, to enable the appearance of the food to be observed during the cooking process.

Said lids mainly present problems in terms of the following aspects:
- By establishing a practically steamtight barrier excess pressure is generated inside the container that suddenly causes the lid to lift at certain moments, spilling the liquids that are boiling.
- When it is necessary stir the food, especially in the case of frying pans, the lid has to be removed to access the inside thereof, which means that the food could splash and cause to the person who is cooking.

### DESCRIPTION OF THE INVENTION

The lid proposed by the invention successfully resolves the aforementioned problems, in terms of the different aspects mentioned above.

To do this, and more specifically, the characteristics of said lid are based on the fact that it includes a body that is divides into two pieces, one of which can be moved in relation to the other in order to determine a fully closed lid or a lid with an opening of a variable width, which can take the form of a small slit for the controlled outlet of steam or otherwise wider opening to allow access to the container for a spoon, fork or any other cooking utensil to stir the food contained in said container.

More specifically, it is anticipated that one of said pieces is equivalent to a conventional lid with a missing v-shaped or circular section, whilst the other corresponds to said circular section, being slightly larger and articulately joined by its vertex to the first piece, rotating at this point and movable by its side or lower area on a metal guide that is suitably fixed to the first piece

### DESCRIPTION OF THE DRAWINGS

To complement this description and in order to aid a better understanding of the characteristics of the invention, according to a preferred practical embodiment thereof, there is a set of illustrative and non-limiting drawings integral to said description, which are as follows:

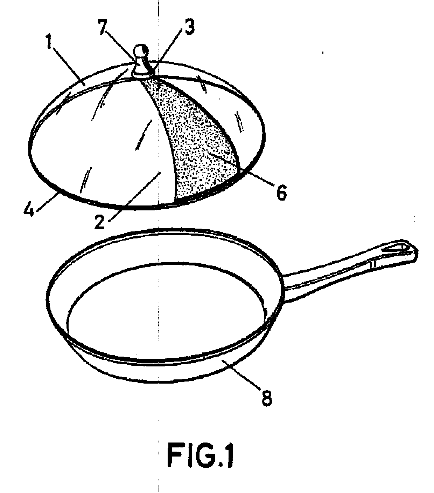

Fig. 1 shows a schematic perspective view of an embodiment of a lid according to the object of the present invention, which appears duly aligned with the complementary frying pan.
Fig 2 also shows a perspective view of the assembly shown in the previous figure duly fitted together.
Fig. 3 finally shows detail, a side elevation view of the diametrical cross section of the lid.

### PREFERRED EMBODIMENT OF THE INVENTION

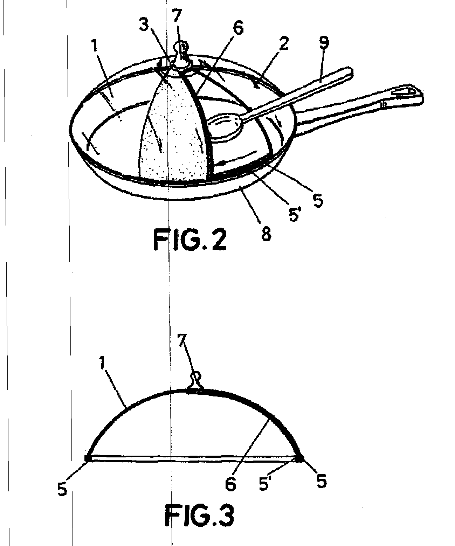

In view of the aforementioned figures it can be observed that the lid proposed by the invention consists of a body (1), in the form of a spherical cap, missing a low triangular section (2) extends from its polar area (3) to its mouth (4), said piece (1) preferably being made from heat-resistant glass and being assisted by a metal ring (5) that is adapted and fixed to said edge (4), which corresponds with the opening (2) defined in said piece (1), interiorly as is the case of the figures or exteriorly it is double, so that a second branch (5') defines a groove as a guide for a second piece (6) that forms a triangle similar to that of the opening (2) and which can move transversally on the guide (5') by actuating the knob (7) that is attached to the vertex thereof, whereby said piece (6) is capable of fully closing the opening (2), opening it at any intermediate position or opening it fully depending on the specific requirements at any time, so that in the fully open position shown in figure 2 it is possible to access the inside of the frying pan (8) with a cooking utensil (9), e.g. a wooden spoon or suchlike, to stir the food contained in the frying pan (8) and with practically no risk at all of the typical spitting that frequently occurs inside the frying pan causing splashes and/or burns to the person using it.

## Claims

1. Lid for frying pans, saucepans and suchlike, **characterized in that** it consists of the functional com ination of two pieces, one of which takes the form of spherical cap or similar form hat has a wide triangular opening extending from its polar or central area towards it edge, whilst the other piece in turn takes a triangular form similar to the aforementioned opening and slightly larger than it, it being anticipated that the first piece includes a suitably positioned metal ring fixed thereto at the level of its mouth, which corresponds to the opening to define a guide on which the second piece can slide, the latter being articulately joined by its vertex to the first piece, all of which enables the second piece to partially or fully close the opening in the first piece so that the lid as a whole determines a slight slit to let the steam out or a wider opening for manual access to the inside of the container without a risk of causing splashes or burns.

2. Lid for frying pans, saucepans and suchlike, according to claim 1, **characterized in that** the vertex of the second piece, i.e. the triangular piece, includes a shaft that passes through a hole in the first piece and that ends in a knob for the manual actuation thereof, i.e. to slide it along the lower lateral guide.

3. Lid for frying pans, saucepans and suchlike, according to the previous claims, **characterized in that** at least the larger piece is made of heat-resistant glass enabling the inside of the container to be seen therethrough.
